# EUROPEAN PATENT SPECIFICATION

(11) **EP 3 825 745 B1**
(45) Date of publication and mention of the grant of the patent: **04.01.2023**
(21) Application number: 20206580.1
(22) Date of filing: 10.11.2020
(51) Int. Cl.: G02B 6/38, G02B 6/44

(54) **OPTICAL ADAPTER SUPPORTING STRUCTURE AND ASSEMBLY**
TRAGSTRUKTUR UND ANORDNUNG EINES OPTISCHEN ADAPTERS
STRUCTURE DE SUPPORT ET ENSEMBLE D'ADAPTATEUR OPTIQUE

(30) Priority: 22.11.2019 IT 201900021891
(43) Date of publication of application: 26.05.2021
(73) Proprietor: Prysmian S.p.A., 20126 Milan (IT)
(72) Inventor: ABBIATI, Fabio, 20126 Milano (IT)
(74) Representative: Perani & Partners S.p.A.

(56) References cited:
- CN-Y- 201 344 983
- JP-A- 2006 106 635
- US-A1- 2016 370 552

## Description

### Field of the invention

The present invention relates to the field of equipment and components for the installation of optical cables in optical networks. In particular, the present invention relates to a supporting structure for retaining optical adapters.

### Background of the invention

A FTTH ("Fiber To The Home") network is an optical access network providing a number of end customers with broadband communication services from operators, i.e. with services requiring data transmission at a very high rate, for example of some Mbit/s.

Typically, a FTTH network comprises a termination box or cabinet which cooperates with an access network and which is typically located in the basement of the building where the end users reside. During installation of the optical termination box, the operator has to lay down a drop cable from a distribution cabinet to the apartment of the end user where the operator has to cut the drop cable and connect the optical fibres to optical connectors by means of optical adapters.

As optical adapters of different type need to be accommodated in the termination boxes, known termination boxes are equipped with a supporting structure for each type of optical adapter, which increases the dimensions of the termination boxes. Furthermore, specific supporting structures for each type of optical adapter complicate the installation operations of the optical cable in the termination box. Additionally, the supporting structure can comprise "breakable" element or "adapting" element in order to retain the optical adapters.

Therefore, there is a demand for the operators to easily and firmly connect different types of optical adapters to the same termination box during installation operations. Moreover, there is also a demand to avoid extra cost or additionally "cutting" operations from installers.

WO 2010/062576 discloses a sliding adapter pack having a plurality of cartridge. Each cartridge is slidable relative to a mounting fixture and independent of the other cartridges. Each cartridge defines a front opening constructed to receive at least four different types of adapters including a quad LC adapter, a duplex LC adapter, a duplex SC adapter, and a simplex SC adapter. Each cartridge further has a snap-fit construction that permits assembly of the cartridge without use of tools.

US2011200294 discloses fiber optic adapter mounting structures including a frame having a front face and a rear face, and at least first and second substantially identically-sized and shaped openings that extend through the frame. A first adapter collar is mounted in the first opening and second adapter collar is mounted in the second opening. The first and second adapter collars have a fiber optic adapter mounting cavity that includes opposed first and second snap clip engagement surfaces therein. A first fiber optic adapter that includes first and second snap clips is mounted in the first adapter collar, and a second fiber optic adapter that includes third and fourth snap clips is mounted in the second adapter collar. The first and second fiber optic adapters are different types of fiber optic adapters that are designed to mate with different types of fiber optic cable termination;

JP 2006 106635, US 2016/370552 and CN 201 344 983 disclose fiber optic adapter mounting structures of the prior art.

In particular, JP 2006 106635 discloses an optical adapter supporting structure for optical adapters, comprising a support base, a first pair of retaining members comprising a first retaining member and an opposite second retaining member, the first and second retaining members projecting from the support base along an insertion direction and being mutually spaced apart along a transversal direction, perpendicular to the insertion direction, for receiving a first optical adapter, wherein the first retaining member comprises a first retaining head configured to retain the first optical adapter along the insertion direction and projecting towards the opposite second retaining member, the first retaining head being formed at a first distance from the support base, measured along the insertion direction, the second retaining member is resiliently deformable and comprises a second retaining head.

### Summary of the invention

The Applicant has tackled the problem of providing an optical adapter supporting structure capable of facilitating insertion operations of different sized optical adapters and providing a firmly engagement avoiding sliding and movement of the retained optical adapters.

The Applicant has found that providing a first retaining member having a first head at a first distance from a base and a second elastic retaining members having a second head at a second distance from the base lower than the first distance speeds up and facilitates the insertion of the different sized optical adapters cable in the same optical adapter supporting structure, improving the flexibility of the optical adapter supporting structure to accommodate different optical adapters.

Therefore, the present invention relates to an optical adapter supporting structure for optical adapters, comprising a support base, a first pair of retaining members comprising a first retaining member and an opposite second retaining member, the first and second retaining members projecting from the support base along an insertion direction and being mutually spaced apart along a transversal direction, perpendicular to the insertion direction, for receiving selectively a first optical adapter and a second optical adapter therebetween; wherein the first retaining member comprises a first retaining head configured to retain the first optical adapter along the insertion direction and projecting towards the opposite second retaining member, the first retaining head being formed at a first distance from the support base, measured along the insertion direction; the second retaining member is resiliently deformable and comprises a second retaining head, configured to retain the second optical adapter along the insertion direction and projecting towards the opposite first retaining member, the second retaining head being formed at a second distance from the support base, measured along the insertion direction, lower than the first distance.

Preferably, the first retaining head is configured to act on an upper surface of the first optical adapter.

Preferably, the second retaining member is configured to, selectively deform along the transversal direction and generate an elastic force along the transversal direction to push the first optical adapter against the opposite first retaining member through the second retaining head, and to retain along the insertion direction the second optical adapter by acting thereon through the second retaining head.

Preferably, the first retaining element comprises a recess, formed between the support base and the first retaining head and configured to engage with a protruding portion of the second optical adapter.

Preferably, the recess is configured to retain the second optical adapter along a longitudinal direction perpendicular to the insertion direction and to the transversal direction.

Preferably, the adapter supporting structure comprises a second pair of retaining members spaced apart from the first pair of retaining members along a longitudinal direction perpendicular to the insertion direction and to the transversal direction, the second pair of retaining members comprising a third retaining member and an opposite fourth retaining member projecting from the support base along the insertion direction, the third and fourth retaining members being mutually spaced apart along the transversal direction for selectively receiving the first and second optical adapters therebetween.

Preferably, the first retaining member and the third retaining member are spaced apart along the longitudinal direction for defining a first seat therebetween, which is configured to engage selectively with a portion of the first and the second optical adapters; the second retaining member and the fourth retaining member are spaced apart along the longitudinal direction for defining a second seat therebetween, which is configured to engage a portion of the first optical adapter.

Preferably, the first seat is configured to engage with portions of the first and second optical adapters for retaining the first and second optical adapters along the longitudinal direction and the second seat is configured to engage with portions of the first optical adapter for retaining the first optical adapter along the longitudinal direction.

Preferably, at least one of the third retaining member and the fourth retaining member comprises a third retaining head configured to act on an upper surface of the first optical adapter and projecting towards the respective opposite retaining member of the second pair of retaining members, the third retaining head being formed at the first distance from the support base, measured along the insertion direction.

According to another aspect, the invention relates to an optical adapter supporting assembly comprising an optical adapter supporting structure, the optical adapter supporting structure retaining a first optical adapter or a second optical adapter, wherein the first retaining head retains along the insertion direction the first optical adapter by acting on the first optical adapter, when the first optical adapter is arranged between the first retaining member and the second retaining member; the second retaining head retains along the insertion direction the second optical adapter by acting on the second optical adapter, when the second optical adapter is arranged between the first retaining member and the second retaining member.

Preferably, the first optical adapter and second optical adapter comprise a body having a lower surface facing the support base, an upper surface spaced apart from the lower surface along the insertion direction, and lateral surfaces mutually spaced apart along the transversal direction, a lateral flexible protrusion projecting from each lateral surface along the transversal direction.

Preferably, the upper surface and lower surface of the first optical adapter are spaced apart for a first height equal or less than the first distance; the lateral flexible protrusions of the second optical adapter project from the lateral surface at a second height, measured from the lower surface along the insertion direction, the second height being equal or less than the second distance.

Preferably, the first retaining head acts on the upper surface of the first optical adapter; the second retaining member deforms and elastically pushes the first optical adapter towards the opposite first retaining member by acting through the second retaining head on the lateral surface of the first optical adapter.

Preferably, the second retaining head retains the second optical adapter along the insertion direction by acting on the lateral flexible protrusion of the second optical adapter.

Preferably, the first retaining element comprises a recess, formed between the support base and the first retaining head and engaging the lateral flexible protrusion of the second optical adapter for retaining the second optical adapter along a longitudinal direction perpendicular to the insertion direction and to the transversal direction.

According to a further aspect, the invention relates to an optical termination box comprising a base, a sidewall projecting from the base and defining an inner area, the sidewall having one or more openings for passage of optical cables and the optical adapter supporting assembly, wherein the support base of the optical adapter supporting structure is associated or integrated with the base of the optical termination box.

### Brief description of the drawings

The present invention will now be described in more detail hereinafter with reference to the accompanying drawings, in which some embodiments of the invention are shown.
FIG. 1 is perspective view of the optical adapter supporting structure according to one embodiment of the present invention;
FIG. 2 is a top view of the optical adapter supporting structure of FIG.1;
FIG. 3 is a front view of the optical adapter supporting structure of FIG.1;
FIG. 4 is a top view of an optical adapter supporting assembly the optical adapter supporting structure according to one embodiment of the present invention retaining a first optical adapter;
FIG. 5 is a perspective view of the optical adapter supporting assembly of FIG.4 retaining the first optical adapter;
FIG. 6 is a front view of the optical adapter supporting assembly of FIG.4 retaining the first optical adapter;
FIG. 7 is a top view of the optical adapter supporting assembly according to one embodiment of the present invention retaining a second optical adapter;
FIG. 8 is a perspective view of the optical adapter supporting assembly of FIG.7 retaining the second optical adapter;
FIG. 9 is a front view of the optical adapter supporting assembly of FIG.7 retaining the second optical adapter;
FIG. 10 is a front view of the optical adapter supporting assembly of FIG.7 retaining the second optical adapter;
FIG. 11 is a perspective view of an optical termination box according to one embodiment of the present invention.

### Detailed description

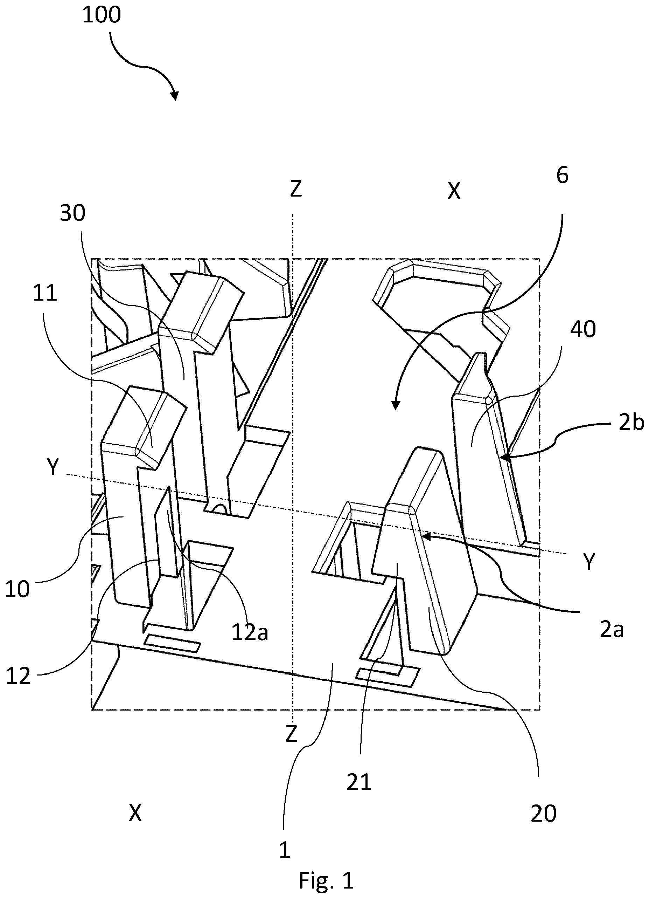

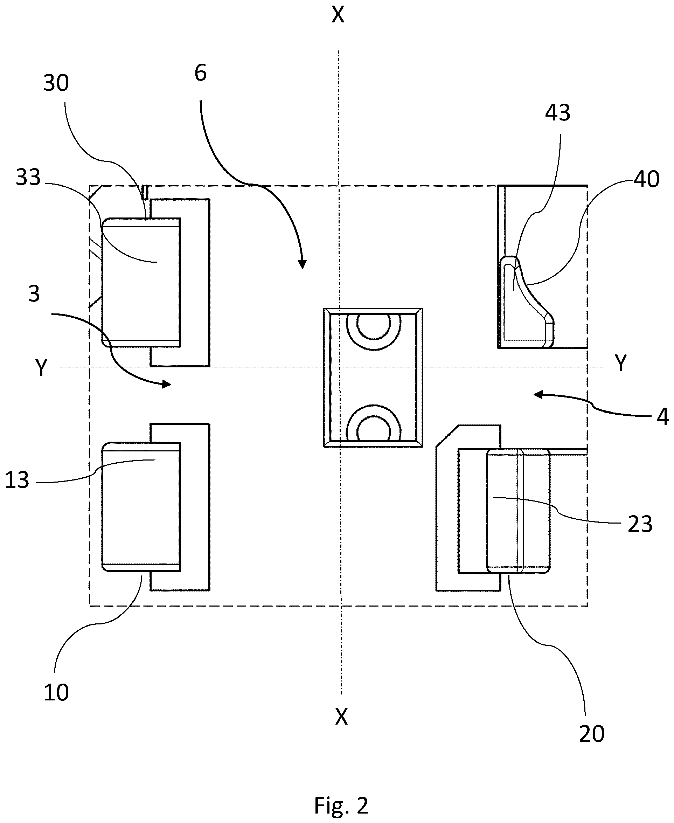

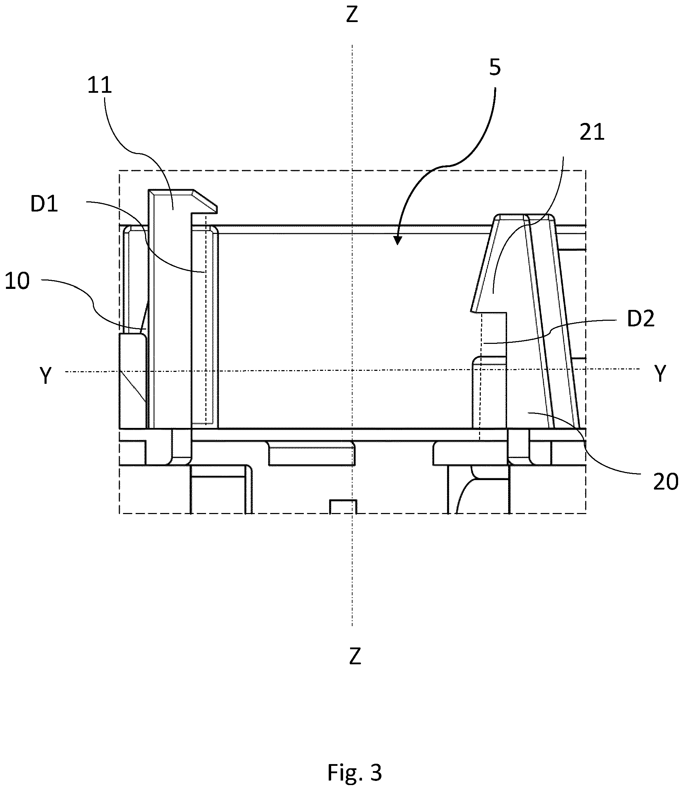

Figures 1-3 show an optical adapter supporting structure 100 for retaining optical adapters.

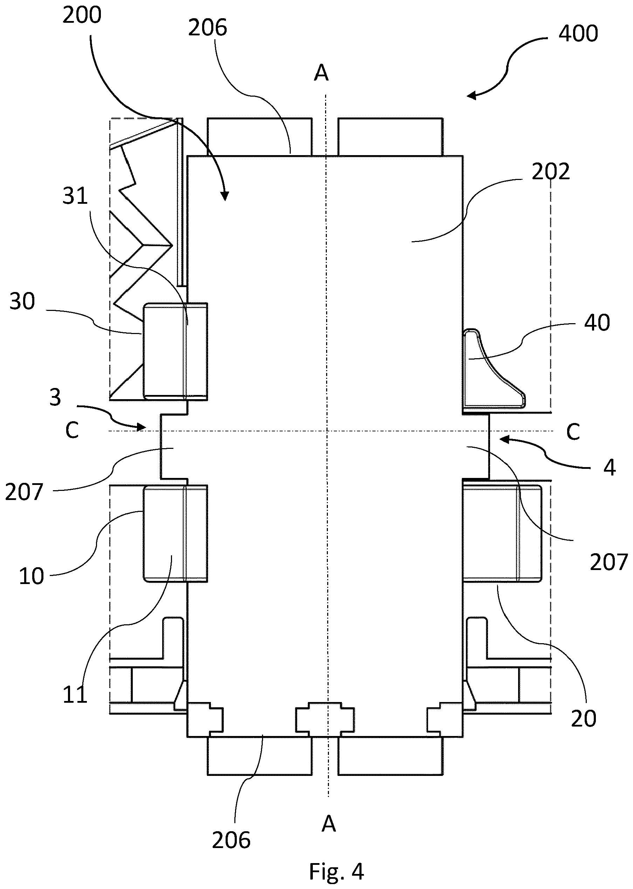

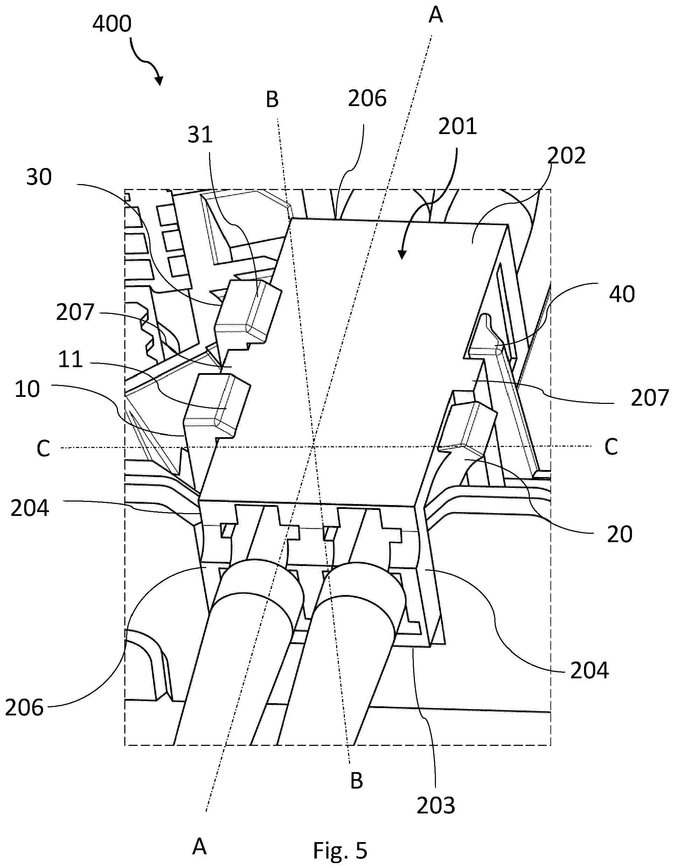

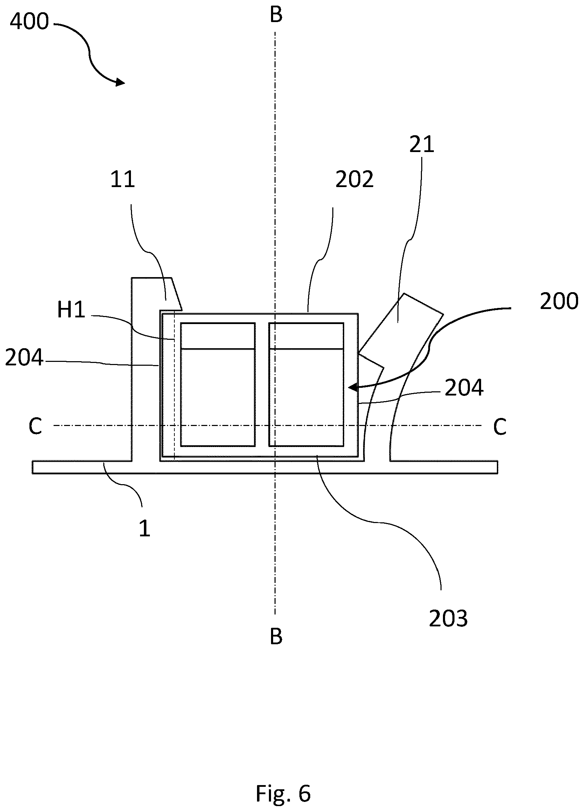

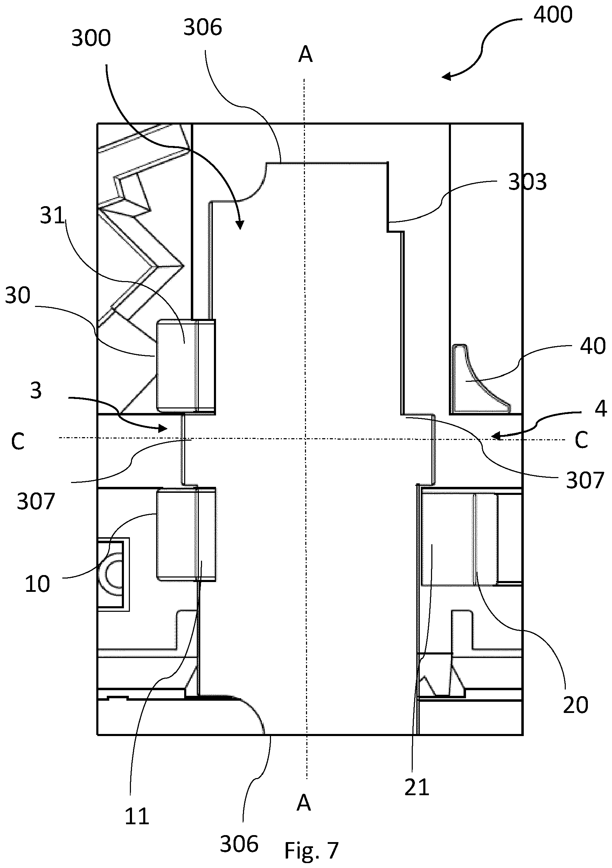

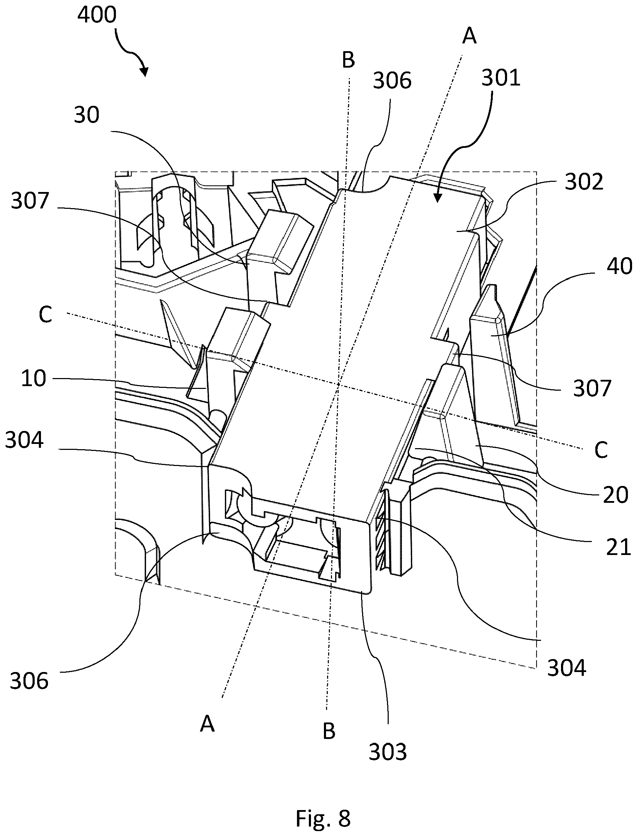

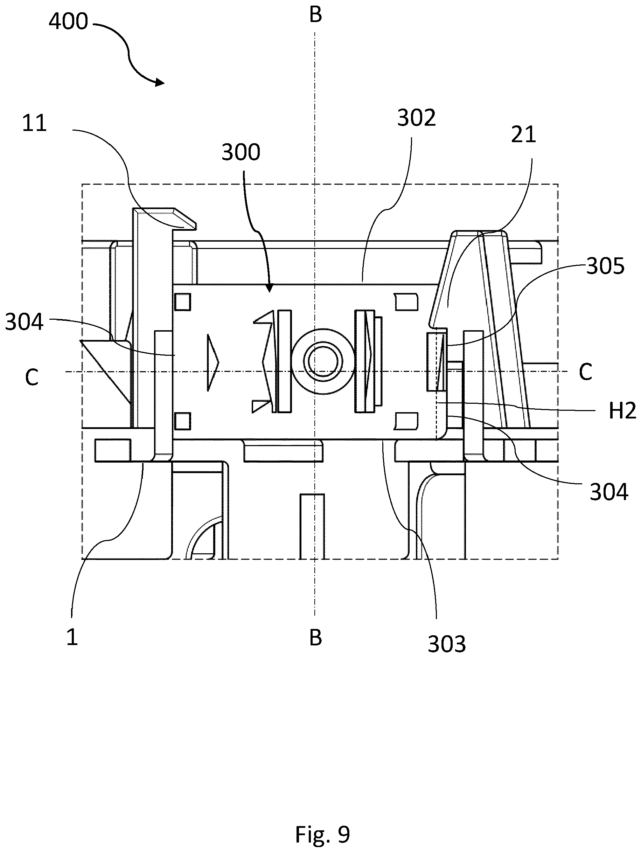

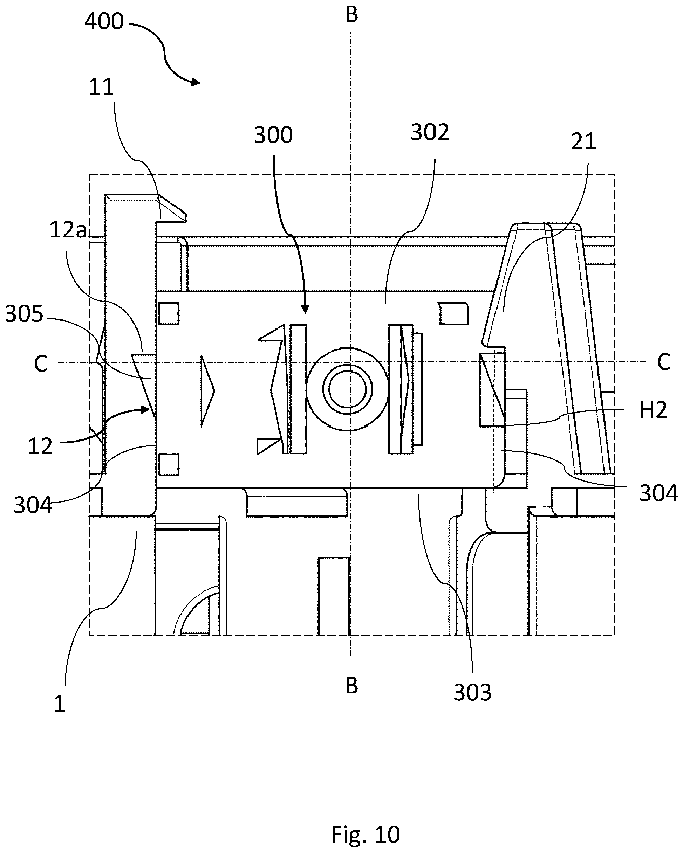

Figures 4-6 show the optical adapter supporting structure 100 retaining a first optical adapter 200, while figures 7-10 show the optical adapter supporting structure 100 retaining a second optical adapter 300.

For the purposes of the present invention, the first optical adapter 200 and the second optical adapter 300 have different sizes. In the examples, the first optical adapter 200 is an LC Duplex and the second optical adapters 300 is an LC Simplex having both standardized and specific footprint.

The LC Duplex has the same footprint of the SC Simplex which is the most diffused type of the connector for FTTH applications.

The first optical adapter 200 and the second optical adapter 300 comprise a body 201, 301, preferably extending along a longitudinal axis A-A between two end portions 206, 306.

The body 201, 301 has a lower surface 203, 303, preferably facing a support surface of a termination box, and an upper surface 202, 302 spaced apart from the lower surface 203, 303 along an insertion axis B-B perpendicular to the longitudinal axis A-A. Specifically, the upper surface 202 and lower surface 203 of the first optical adapter 200 are spaced apart for a first height HI. Preferably, the first height HI is comprised in range between 9.2 mm and 9.4mm, preferably the first height HI is 9.3mm.

The body 201, 301 has lateral surfaces 204, 304 mutually spaced apart along a transversal axis C-C perpendicular to the insertion axis B-B and the longitudinal axis A-A.

The first optical adapter 200 and second optical adapter 300 comprise a lateral flexible protrusion 205, 305 projecting from each lateral surface 204, 304 along the transversal axis C-C. Preferably, the lateral flexible protrusions 205, 305 are metal or plastic springs. More preferably, the lateral flexible protrusions 205 are removable from the first optical adapter 200 before insertion in the optical adapter supporting structure 100.

The lateral flexible protrusions 305 of the second optical adapter 300 project from the lateral surface 304 at a second height H2 measured from the lower surface 303 along the insertion axis Z-Z. Preferably, the second height H2 is in a range 4 mm to 5 mm.

The first optical adapter 200 and the second optical adapter 300 comprise a wing 207, 307 projecting from each lateral surface 204, 304 along the transversal axis C-C, preferably in an intermediate position between the end portions 206, 306.

Preferably, the first optical adapter 200 has a length measured along the longitudinal axis A-A of 29 mm, a width measured along the transversal axis B-B of 12,9 mm or 15 mm and an height measured along the insertion axis C-C between the upper and lower surface of 9,3 mm.

Preferably, the second optical adapter 300 has a length measured along the longitudinal axis A-A of 25.7 mm, a width measured along the transversal axis B-B of 11,5 mm or 13 mm or 10mm, an height measured along the insertion axis C-C between the upper and lower surface of 7 mm.

The optical adapters supporting structure 100 comprises a support base 1, preferably associable or attachable to an optical termination box or to a support surface of an optical termination box.

The optical adapter supporting structure 100 comprises a first pair of retaining members 2a projecting from the support base 1.

The first pair of retaining members 2a comprises a first retaining member 10 and an opposite second retaining member 20.

The first 10 and second retaining members 20 project from the support base 1 along an insertion direction Z-Z, preferably perpendicular to the support base 1.

The first 10 and second retaining members 20 are mutually spaced apart along a transversal direction Y-Y, perpendicular to the insertion direction Z-Z, for receiving selectively the first optical adapter 200 and the second optical adapter 300 therebetween.

According to one embodiment, the optical adapter supporting structure 100 comprises a third retaining member 30 projecting from the support base 1 along the insertion direction Z-Z and preferably spaced apart from the first retaining member 10 along a longitudinal direction X-X perpendicular to the insertion direction Z-Z and to the transversal direction Y-Y.

Preferably, the optical adapter supporting structure 100 comprises a fourth retaining member 40 projecting from the support base 1 along the insertion direction Z-Z and preferably spaced apart from the second retaining member 20 along the longitudinal direction X-X. More preferably, the third retaining member 30 and fourth retaining member 40 are mutually spaced apart along the transversal direction Y-Y for selectively receiving the first optical adapter 200 and the second optical adapter 300 therebetween.

According to one embodiment, the third retaining member 30 and fourth retaining member 40 define a second pair of retaining members 2b.

Thereinafter, it will be referred to the second pair of retaining members 2b wherein the features related to the fourth retaining member 40 are to be considered preferable.

According to one embodiment, the second pair of retaining members 2b is spaced apart from the first pair of retaining members 2a along a longitudinal direction X-X perpendicular to the insertion direction Z-Z and to the transversal direction Y-Y.

Preferably, the first pair of optical members 2a and the second pair of optical members 2b define therebetween a receiving area 6 to accommodate selectively the first optical adapter 200 and the second optical adapter 300.

The optical adapter supporting structure 100 is therefore configured to receive selectively the first optical adapter 200 and the second optical adapter 300 between the retaining members 10, 20, 30, 40 of the first pair of retaining members 2a and the second pair of the retaining members 2b.

Preferably, the first pair of retaining members 2a and the second pair of retaining members 2b are configured to cooperate to receive and retain selectively the first optical adapter 200 and the second optical adapter 300.

More preferably, the first retaining member 10 and the second retaining member 20 extend from the support base 1 towards respective end portions 13, 23 along the insertion direction Z-Z. Likewise, the third retaining member 30 and the fourth retaining member 40 extend from the support base 1 towards respective end portions 33, 43 along the insertion direction Z-Z.

Specifically, the end portions 13, 23, 33, 43 define an insertion opening 5 through which the first optical adapter 200 or the second optical adapter 300 firstly passes upon insertion of the optical adapters along the insertion direction Z-Z between the retaining members 10, 20, 30, 40.

According to one embodiment, the first retaining member 10 and the third retaining member 30 are spaced apart along the longitudinal direction X-X for defining a first seat 3 therebetween. Accordingly, the second retaining member 20 and the fourth retaining member 40 are spaced apart along the longitudinal direction X-X for defining a second seat 4 therebetween.

Preferably, the first seat 3 and the second seat 4 are mutually spaced apart along the transversal direction Y-Y.

Preferably, the first seat 3 is configured to engage selectively with a portion of the first optical adapter 200 and the second optical adapter 300. More preferably, the first seat 3 and the second seat 4 are configured to engage with portions of the first optical adapter 200 and the second optical adapter 300 for retaining the first optical adapter 200 and the second optical adapter 300 along the longitudinal direction X-X.

More preferably, the first seat 3 is configured to retain the wing 207, 307 which projects towards the first seat 3, when the first optical adapter 200 and the second optical adapter 300 are selectively arranged between the first pair of retaining members 2a and the second pair of retaining members 2b. On the other hand, the second seat 4 is configured to engage selectively with a portion of the first optical adapter 200 and the second optical adapter 300. Specifically, the second seat 4 is configured to retain the wing 207 of the first optical adapter 200 projecting towards the second seat 4 when the first optical adapter 200 is arranged between the first pair of retaining members 2a and the second pair of retaining members 2b.

The first retaining member 10 comprises a first retaining head 11 configured to retain the first optical adapter 200 along the insertion direction Z-Z.

The first retaining head 11 projects towards the opposite second retaining member 20, preferably from the end portion 13. Preferably, the first retaining head 11 is formed at a first distance D1 from the support base 1, measured along the insertion direction Z-Z.

Preferably, the first distance D1 has a value in range between 9.4mm and 9.6mm so that the first height HI of the first optical adapter 200 is equal or lower than the first distance D1 allowing interference fit to retain the first optical adapter 200 along the insertion direction Z-Z.

More preferably, the first retaining head 11 is configured to act on an upper surface of the first optical adapter 200. More preferably, the first retaining head 11 is configured to urge the first optical adapter 200 towards the support base 1 along the insertion direction Z-Z in order to prevent the first optical adapter 200 from translating at least along the insertion direction Z-Z.

According to one embodiment, at least one of the third retaining member 30 and the fourth retaining member 40 comprises a third retaining head 31 or a fourth retaining head configured to act on an upper surface of the first optical adapter 200. In the example, the third retaining head 31 projects towards the respective opposite fourth retaining member 40 of the second pair of retaining members 2b. In detail, the third retaining head 31 is formed at the first distance D1 from the support base 1, measured along the insertion direction Z-Z.

When the first optical adapter 200 is arranged between the pairs of retaining members 2a, 2b, thanks to the action of the first retaining head 11 and the third retaining head 31, the seats 3, 4 and the retaining members 10, 20, 30, 40 spaced apart along the transversal direction Y-Y, the first optical adapter 200 is respectively retained along the insertion direction Z-Z, the longitudinal direction X-X and the transversal direction Y-Y.

According to the preferred embodiment shown in figure 1-3, the third retaining member 30 comprises the third retaining head 31. According to an alternative embodiment not shown, the fourth retaining member 40 comprises a fourth retaining head. According to a further alternative embodiment not shown, the third retaining member 30 and the fourth retaining member 40 comprise respectively the third retaining head 31 and the fourth retaining head.

According to one embodiment, the first retaining member 10 comprises a recess 12. The recess 12 is formed between the support base 1 and the first retaining head 11 and is configured to engage with a protruding portion of the second optical adapter 300. Preferably, the recess 12 is configured to engage the lateral flexible protrusions 305 of the second optical adapter 300.

The recess 12 is configured to retain the second optical adapter 300 along the longitudinal direction X-X. Preferably, the recess 12 is configured receive the protruding portion of the second optical adapter 300 preventing the second optical adapter 300 from translating along the transversal direction Y-Y.

The recess 12 is configured to retain the second optical adapter 300 along the insertion direction Z-Z.

Preferably, the recess 12 has a top wall 12a configured to act on a protruding portion of the second optical adapter 300. In detail, the top wall 12a is configured to urge the second optical adapter 300 towards the support base 1 along the insertion direction Z-Z.

The second retaining member 20 is resiliently deformable, preferably along the transversal direction Y-Y.

The second retaining member 20 comprises a second retaining head 21, configured to retain the second optical adapter 300 along the insertion direction Z-Z.

The second retaining head 21 projects towards the opposite first retaining member 10 preferably from the end portion 23. Specifically, the second retaining head 21 is formed at a second distance D2 from the support base 1, measured along the insertion direction Z-Z. Preferably, the second distance D2 is lower than the first distance D1.

More preferably, the second distance D2 has a value in range between 5,5 mm and 4,0 mm such that the second height H2 of the second optical adapter 300 is equal or lower than the second distance D2 allowing interference fit to retain the second optical adapter 300.

More preferably, the second retaining head 21 acting on a protruding portion of the second optical adapter 300 is configured to push the second optical adapter 300 along the insertion direction Z-Z towards the support base 1 so that the second retaining head 21 is configured to retain the second optical adapter 300 along the insertion direction Z-Z acting on the insertion direction towards the support base 1.

According to one embodiment, the second retaining head 21 is configured to prevent the translation of the second optical adapters 300 along the longitudinal direction X-X abutting against a portion of the second optical adapter 300 cooperating with the recess 12. In the example, the wing 307 of the second optical adapter 300 facing the second seat 4 abuts against the second retaining head 21 when the second optical adapter 300 is arranged between the pairs of retaining members 2a, 2b.

When the second optical adapter 300 is arranged between the pair of retaining members 2a,2b, thanks to the recess 12 and the second retaining head 21, the second optical adapter 300 is firmly retained along the insertion direction Z-Z and the longitudinal direction X-X. Furthermore, the first seat 3 and the second retaining head 21 improve the gripping on the second optical adapter 300 along the longitudinal direction X-X.

Preferably, the second retaining member 20 is configured to deform along the transversal direction Y-Y and generate an elastic force along the transversal direction Y-Y to push the first optical adapter 200 against the opposite first retaining member 10 through the second retaining head 21. By this way, the second retaining member 20 is configured to retain the first optical adapters 200 along the transversal direction Y-Y and along the insertion direction Z-Z.

Furthermore, the second retaining member 20 is configured to retain along the insertion direction Z-Z the second optical adapter 300 by acting thereon through the second retaining head 21.

Thanks to the elastic properties of the second retaining member 20, the optical adapter supporting structure 100 is able to firmly retain the first optical adapter 200 and the second optical adapter 300. Furthermore, the elastic properties of the second retaining member 20 improve the gripping effect on the first optical adapter 200 along the transversal direction Y-Y.

According to one embodiment not shown in the figures, the fourth retaining member 40 is elastically deformable and comprises a fourth retaining head projecting from the fourth retaining member 40 towards the respective third retaining member 30. Preferably, the fourth retaining head is formed at distance from the support base 1, measured along the insertion direction Z-Z. With this embodiment, the second retaining member 20 and the fourth retaining member 40 have a respective retaining head. By this way, the optical adapter supporting structure 100 is configured to retain the first optical adapter 200 upon the deformation of the second retaining member 20 and the fourth retaining member 40. Furthermore, the optical adapter supporting structure 100 is configured to retain a portion of the second optical adapter 300 between the second retaining head and the fourth retaining head for retaining the second optical adapter 300 along the longitudinal direction X-X, as well as to retain a lateral protruding portion of the second optical adapter 300 through the second retaining head.

Figures 4-10 show an optical adapter supporting assembly 400.

The optical adapter supporting assembly 400 comprises the optical adapter supporting structure 100 which retains the first optical adapter 200 (figures 4-6) or the second optical adapter 300 (figures 7-10). Therefore, the optical adapter supporting assembly 400 comprises selectively the first optical adapter 200 or the second optical adapter 300.

When the first optical adapter 200 is arranged between the first retaining member 10 and the second retaining member 20, the first retaining head 11 retains along the insertion direction Z-Z the first optical adapter 200 by acting on the first optical adapter 200. Vice versa, when the second optical adapter 300 is arranged between the first retaining member 10 and the second retaining member 20, the second retaining head 21 retains along the insertion direction Z-Z the second optical adapter 300 by acting on the second optical adapter 300.

The first optical adapter 200 and the second optical adapter 300 are selectively arranged between the first pair of retaining members 2a and the second pair of retaining members 2b such that the lower surfaces 202, 302 face the support base 1 and the lateral surfaces 204, 304 face the retaining members 10, 20, 30, 40.

Specifically, when the first optical adapter 200 is arranged between the first retaining member 10 and the second retaining member 20, the first retaining head 11 acts on the upper surface 202 of the first optical adapter 200, the second retaining member 20 deforms and elastically pushes the first optical adapter 200 towards the opposite first retaining member 10 by acting through the second retaining head 21 on the lateral surface 204 of the first optical adapter 200. By this way, the first optical adapter 200 is retained along the insertion direction Z-Z and along the transversal direction Y-Y.

According to one embodiment, a portion of the first optical adapter 200, preferably the wings 207, abuts against the first retaining member 10 and the second retaining member 20. By this way, the first optical adapter 200 is retained along the longitudinal direction X-X.

Preferably, when the first optical adapter 200 is arranged between the first pair of retaining members 2a and the second pair of retaining members 2b, the retaining members 10, 20, 30 40 act on the wings 207 arranged in the first seat 3 and the second seat 4 to retain the first optical adapter 200 along the longitudinal direction X-X.

More preferably, when the first optical adapter 200 is arranged between the first pair of retaining members 2a and the second pair of retaining members 2b, the first retaining head 11 and the third retaining head 31 act on the upper surface 202 of the first optical adapter 200, thereby the first optical adapter 200 is retained along the insertion direction Z-Z.

When the second optical adapter 300 is arranged between the first retaining member 10 and the second retaining member 20, the second retaining head 21 retains the second optical adapter 300 along the insertion direction Y-Y by acting on the lateral flexible protrusion 305 of the second optical adapter 300. By this way, the second optical adapter 300 is retained along the insertion direction Z-Z.

Preferably, when the second optical adapter 300 is arranged between the first retaining member 10 and the second retaining member 20, the recess 12 engages the lateral flexible protrusion 305 of the second optical adapter 300 for retaining the second optical adapter 300 along the longitudinal direction X-X perpendicular to the insertion direction Z-Z and to the transversal direction Y-Y.

More preferably, when the second optical adapter 200 is arranged between the first pair of retaining member 2a and the second pair of retaining members 2b, the first retaining member 10 and the third retaining member 30 act on the wings 307 arranged in the first seat 3 while the second retaining head 21 acts on the wing 307 projecting towards the second seat 4. Thanks to this arrangement, the second optical adapter 300 is further retained along the longitudinal direction X-X since one wing 307 abuts against the second retaining head, the opposite wing 307 is retained in the first seat 3 and the lateral flexible protrusion 305 is retained in the recess 12.

According to the embodiment wherein the optical adapter supporting structure comprises the fourth retaining head and the second retaining head, when the second optical adapter 300 is arranged between the first pair of retaining member 2a and the second pair of retaining members 2b, the combined action of the second retaining head 21, the fourth retaining head and the recess 12 retain the second optical adapter 300 along the longitudinal direction X-X, transversal direction Y-Y and insertion direction Z-Z. On the other hand, when the first optical adapter 200 is arranged between the first pair of retaining members 2a and the second pair of retaining members 2b, both the fourth retaining head and the second retaining head 21 are elastically deformed and push the first optical adapter 200 against the opposite retaining members 10, 30. By this way, the first optical adapter 200 is retained along the longitudinal direction X-X, transversal direction Y-Y and insertion direction Z-Z.

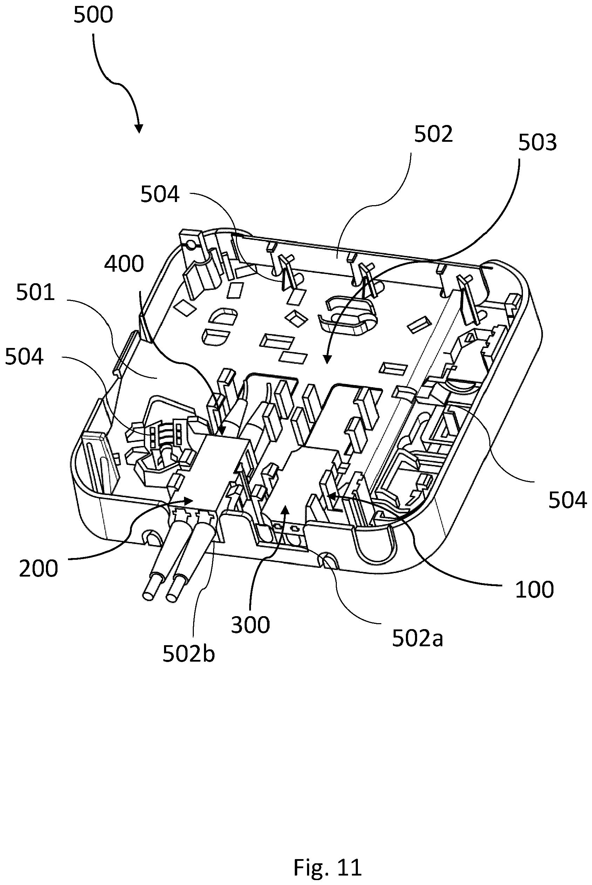

A further object of the present invention is an optical termination box 500, shown in the figure 11. The optical termination box 500 comprises a base 501 attachable to a wall or to a support structure. The optical termination box 500 further comprises a sidewall 502 projecting from the base 501 and defining an inner area 503 wherein optical adapters 200, 300 and guiding structures 504 for optical cables or optical fibers are arranged. Specifically, the sidewall 502 has one or more openings 502a, 502b for passage of optical connectors inserted into the optical adapters 200, 300, preferably spaced apart. The optical termination box 500 comprises, arranged in the inner area one or more optical adapter supporting assemblies 400 as described above. According to one embodiment the support base 1 of the one or more optical adapters supporting structure 100 are associated or integrated with the base 501 of the optical termination box 500.

## Claims

1. An optical adapter supporting structure (100) for optical adapters (200, 300), comprising:
- a support base (1);
- a first pair of retaining members (2a) comprising a first retaining member (10) and an opposite second retaining member (20), the first (10) and second retaining members (20) projecting from the support base (1) along an insertion direction (Z-Z) and being mutually spaced apart along a transversal direction (Y-Y), perpendicular to the insertion direction (Z-Z), for receiving selectively a first optical adapter (200) and a second optical adapter (300) therebetween;
wherein:
- the first retaining member (10) comprises a first retaining head (11) configured to retain the first optical adapter (200) along the insertion direction (Z-Z) and projecting towards the opposite second retaining member (20), the first retaining head (11) being formed at a first distance (D1) from the support base (1), measured along the insertion direction (Z-Z);
- the second retaining member (20) is resiliently deformable and comprises a second retaining head (21), configured to retain the second optical adapter (300) along the insertion direction (Z-Z) and projecting towards the opposite first retaining member (10), the second retaining head (21) being formed at a second distance (D2) from the support base (1), measured along the insertion direction (Z-Z), lower than the first distance (D1).

2. The optical adapter supporting structure (100) according to claim 1, wherein the first retaining head (11) is configured to act on an upper surface of the first optical adapter (200).

3. The optical adapter supporting structure (100) according to claim 1 or 2, wherein the second retaining member (20) is configured to, selectively:
- deform along the transversal direction (Y-Y) and generate an elastic force along the transversal direction (Y-Y) to push the first optical adapter (200) against the opposite first retaining member (10) through the second retaining head (21), and
- retain along the insertion direction (Z-Z) the second optical adapter (300) by acting thereon through the second retaining head (21).

4. The optical adapter supporting structure (100) according to any claim 1 to 3, wherein the first retaining member (10) comprises a recess (12), formed between the support base (1) and the first retaining head (11) and configured to engage with a protruding portion of the second optical adapter (300), preferably wherein the recess (12) is configured to retain the second optical adapter (300) along a longitudinal direction (X-X) perpendicular to the insertion direction (Z-Z) and to the transversal direction (Y-Y).

5. The optical adapter supporting structure (100) according to any claim 1 to 4, comprising a second pair of retaining members (2b) spaced apart from the first pair of retaining members (2a) along a longitudinal direction (X-X) perpendicular to the insertion direction (Z-Z) and to the transversal direction (Y-Y), the second pair of retaining members (2b) comprising a third retaining member (30) and an opposite fourth retaining member (40) projecting from the support base (1) along the insertion direction (Z-Z), the third (30) and fourth retaining members (40) being mutually spaced apart along the transversal direction (Y-Y) for selectively receiving the first (200) and second optical adapters (300) therebetween.

6. The optical adapter supporting structure (100) according to claim 5, wherein:
- the first retaining member (10) and the third retaining member (30) are spaced apart along the longitudinal direction (X-X) for defining a first seat (3) therebetween, which is configured to engage selectively with a portion of the first (200) and the second optical adapters (300);
- the second retaining member (20) and the fourth retaining member (40) are spaced apart along the longitudinal direction (X-X) for defining a second seat (4) therebetween, which is configured to engage a portion of the first optical adapter (200).

7. The optical adapter supporting structure (100) according to claim 6, wherein:
- the first seat (3) is configured to engage with portions of the first optical adapter (200) and of the second optical adapter (300) for retaining the first optical adapter (200) and the second optical adapter (300) along the longitudinal direction (X-X);
- the second seat (4) is configured to engage with portions of the first optical adapter (200) for retaining the first optical adapter (200) along the longitudinal direction (X-X).

8. The optical adapter supporting structure (100) according to any claim 5 to 7, wherein at least one of the third retaining member (30) and the fourth retaining member (40) comprises a third retaining head (31) configured to act on an upper surface of the first optical adapter (200) and projecting towards the respective opposite retaining member (40, 30) of the second pair of retaining members (2b), the third retaining head (31) being formed at the first distance (D1) from the support base (1), measured along the insertion direction (Z-Z).

9. An optical adapter supporting assembly (400), comprising:
- an optical adapter supporting structure (100) according to any claim 1 to 8, the optical adapter supporting structure (100) retaining a first optical adapter (200) or a second optical adapter (300),
wherein:
- the first retaining head (11) retains along the insertion direction (Z-Z) the first optical adapter (200) by acting on the first optical adapter (200), when the first optical adapter (200) is arranged between the first retaining member (10) and the second retaining member (20);
- the second retaining head (21) retains along the insertion direction (Z-Z) the second optical adapter (300) by acting on the second optical adapter (300), when the second optical adapter (300) is arranged between the first retaining member (10) and the second retaining member (20).

10. The optical adapter supporting assembly (400) according to claim 9, wherein the first optical adapter (200) and second optical adapter (300) comprise:
- a body (201, 301) having a lower surface (202, 302) facing the support base (1), an upper surface (203, 303) spaced apart from the lower surface (202, 302) along the insertion direction (Z-Z), and lateral surfaces (204, 304) mutually spaced apart along the transversal direction (Y-Y),
- a lateral flexible protrusion (205, 305) projecting from each lateral surface (204, 304) along the transversal direction (Y-Y).

11. The optical adapter supporting assembly (400) according to claim 10, wherein:
- the upper surface (202) and lower surface (203) of the first optical adapter (200) are spaced apart for a first height (H1) equal or less than the first distance (D1);
- the lateral flexible protrusions (305) of the second optical adapter (300) project from the lateral surface (304) at a second height (H2), measured from the lower surface (303) along the insertion direction (Z-Z), the second height (H2) being equal or less than the second distance (D2).

12. The optical adapter supporting assembly (400) according to claim 11, wherein:
- the first retaining head (11) acts on the upper surface (202) of the first optical adapter (200);
- the second retaining member (20) deforms and elastically pushes the first optical adapter (200) towards the opposite first retaining member (10) by acting through the second retaining head (21) on the lateral surface (204) of the first optical adapter (200).

13. The optical adapter supporting assembly (400) according to claim 11 wherein:
- the second retaining head (21) retains the second optical adapter (300) along the insertion direction (Z-Z) by acting on the lateral flexible protrusion (305) of the second optical adapter (300).

14. The optical adapter retaining assembly (400) according to claim 12, wherein:
- the first retaining member (10) comprises a recess (12), formed between the support base (1) and the first retaining head (11), and engaging the lateral flexible protrusion (305) of the second optical adapter (300) for retaining the second optical adapter (300) along a longitudinal direction (X-X) perpendicular to the insertion direction (Z-Z) and to the transversal direction (Y-Y).

15. An optical termination box (500), comprising:
- a base (501),
- a sidewall (502) projecting from the base (501) and defining an inner area (503), the sidewall (502) having one or more openings (502a, 502b) for passage of optical connectors;
- an optical adapter supporting assembly (400) according to any claim 9 to 14; wherein the support base (1) of the optical adapter supporting structure (100) is associated or integrated with the base (501) of the optical termination box (500).

## Patentansprüche

1. Trägerstruktur (100) für optische Adapter (200, 300), umfassend:
- eine Stützbasis (1);
- ein erstes Paar von Halteelementen (2a), die ein erstes Halteelement (10) und ein gegenüberliegendes zweites Halteelement (20) umfassen, wobei das erste (10) und das zweite Halteelement (20) von der Trägerbasis (1) entlang einer Einschubrichtung (Z-Z) vorstehen und entlang einer Querrichtung (Y-Y), die senkrecht zur Einschubrichtung (Z-Z) verläuft, voneinander beabstandet sind, um selektiv einen ersten optischen Adapter (200) und einen zweiten optischen Adapter (300) dazwischen aufzunehmen; wobei:
- das erste Halteelement (10) einen ersten Haltekopf (11) umfasst, der so konfiguriert ist, dass er den ersten optischen Adapter (200) entlang der Einschubrichtung (Z-Z) hält und in Richtung des gegenüberliegenden zweiten Halteelements (20) vorsteht, wobei der erste Haltekopf (11) in einem ersten Abstand (D1) von der Trägerbasis (1), gemessen entlang der Einschubrichtung (Z-Z), ausgebildet ist
- das zweite Halteelement (20) elastisch verformbar ist und einen zweiten Haltekopf (21) umfasst, der so konfiguriert ist, dass er den zweiten optischen Adapter (300) entlang der Einschubrichtung (Z-Z) hält und in Richtung des gegenüberliegenden ersten Halteelements (10) vorsteht, wobei der zweite Haltekopf (21) in einem zweiten Abstand (D2) von der Trägerbasis (1), gemessen entlang der Einschubrichtung (Z-Z), ausgebildet ist, der geringer als der erste Abstand (D1) ist.

2. Trägerstruktur (100) für optische Adapter nach Anspruch 1, wobei der erste Haltekopf (11) so konfiguriert ist, dass er auf eine obere Fläche des ersten optischen Adapters (200) wirkt.

3. Trägerstruktur (100) für optische Adapter nach Anspruch 1 oder 2, wobei das zweite Halteelement (20) so konfiguriert ist, dass es sich selektiv:
- entlang der Querrichtung (Y-Y) verformt und eine elastische Kraft entlang der Querrichtung (Y-Y) erzeugt, um den ersten optischen Adapter (200) gegen das gegenüberliegende erste Halteelement (10) durch den zweiten Haltekopf (21) zu drücken, und
- den zweiten optischen Adapter (300) entlang der Einschubrichtung (Z-Z) zu halten, indem er durch den zweiten Haltekopf (21) auf ihn einwirkt.

4. Trägerstruktur (100) für optische Adapter nach einem der Ansprüche 1 bis 3, wobei das erste Halteelement (10) eine Aussparung (12) umfasst, die zwischen der Trägerbasis (1) und dem ersten Haltekopf (11) ausgebildet und so konfiguriert ist, dass sie in einen vorstehenden Abschnitt des zweiten optischen Adapters (300) eingreift, wobei die Aussparung (12) vorzugsweise so konfiguriert ist, dass sie den zweiten optischen Adapter (300) entlang einer Längsrichtung (X-X) senkrecht zur Einschubrichtung (Z-Z) und zur Querrichtung (Y-Y) hält.

5. Trägerstruktur (100) für optische Adapter nach einem der Ansprüche 1 bis 4, umfassend ein zweites Paar von Halteelementen (2b), die von dem ersten Paar von Halteelementen (2a) entlang einer Längsrichtung (X-X) senkrecht zur Einschubrichtung (Z-Z) und zur Querrichtung (Y-Y) beabstandet sind, wobei das zweite Paar von Halteelementen (2b) ein drittes Halteelement (30) und ein gegenüberliegendes viertes Halteelement (40) umfasst, die von der Trägerbasis (1) entlang der Einschubrichtung (Z-Z) vorstehen, wobei das dritte (30) und das vierte Halteelement (40) entlang der Querrichtung (Y-Y) voneinander beabstandet sind, um den ersten (200) und den zweiten optischen Adapter (300) dazwischen selektiv aufzunehmen.

6. Trägerstruktur (100) für optische Adapter nach Anspruch 5, wobei:
- das erste Halteelement (10) und das dritte Halteelement (30) entlang der Längsrichtung (X-X) voneinander beabstandet sind, um einen ersten Sitz (3) dazwischen zu definieren, der so konfiguriert ist, dass er selektiv mit einem Abschnitt des ersten (200) und des zweiten optischen Adapters (300) in Eingriff kommt;
- das zweite Halteelement (20) und das vierte Halteelement (40) entlang der Längsrichtung (X-X) voneinander beabstandet sind, um einen zweiten Sitz (4) dazwischen zu definieren, der so konfiguriert ist, dass er mit einem Teil des ersten optischen Adapters (200) in Eingriff kommt.

7. Trägerstruktur (100) für optische Adapter nach Anspruch 6, wobei:
- der erste Sitz (3) so konfiguriert ist, dass er mit Teilen des ersten optischen Adapters (200) und des zweiten optischen Adapters (300) in Eingriff kommt, um den ersten optischen Adapter (200) und den zweiten optischen Adapter (300) entlang der Längsrichtung (X-X) zu halten;
- der zweite Sitz (4) so konfiguriert ist, dass er mit Abschnitten des ersten optischen Adapters (200) in Eingriff kommt, um den ersten optischen Adapter (200) entlang der Längsrichtung (X-X) zu halten.

8. Trägerstruktur (100) für optische Adapter nach einem der Ansprüche 5 bis 7, wobei mindestens eines von dem dritten Halteelement (30) und dem vierten Halteelement (40) einen dritten Haltekopf (31) umfasst, der so konfiguriert ist, dass er auf eine obere Fläche des ersten optischen Adapters (200) einwirkt und in Richtung des jeweiligen gegenüberliegenden Halteelements (40, 30) des zweiten Paars von Halteelementen (2b) vorsteht, wobei der dritte Haltekopf (31) in dem ersten Abstand (D1) von der Trägerbasis (1), gemessen entlang der Einschubrichtung (Z-Z), ausgebildet ist.

9. Trägeranordnung (400) für optische Adapter, umfassend:
- eine Trägerstruktur (100) für optische Adapter nach einem der Ansprüche 1 bis 8, wobei die Trägerstruktur (100) für optische Adapter einen ersten optischen Adapter (200) oder einen zweiten optischen Adapter (300) hält, wobei:
- der erste Haltekopf (11) den ersten optischen Adapter (200) durch Einwirkung auf den ersten optischen Adapter (200) entlang der Einschubrichtung (Z-Z) festhält, wenn der erste optische Adapter (200) zwischen dem ersten Halteelement (10) und dem zweiten Halteelement (20) angeordnet ist;
- der zweite Haltekopf (21) den zweiten optischen Adapter (300) entlang der Einschubrichtung (Z-Z) hält, indem er auf den zweiten optischen Adapter (300) wirkt, wenn der zweite optische Adapter (300) zwischen dem ersten Halteelement (10) und dem zweiten Halteelement (20) angeordnet ist.

10. Trägeranordnung (400) für optischen Adapter nach Anspruch 9, wobei der erste optische Adapter (200) und der zweite optische Adapter (300) Folgendes umfassen:
- einen Körper (201, 301) mit einer unteren Fläche (202, 302), die der Stützbasis (1) zugewandt ist, einer oberen Fläche (203, 303), die von der unteren Fläche (202, 302) entlang der Einschubrichtung (Z-Z) beabstandet ist, und Seitenflächen (204, 304), die entlang der Querrichtung (Y-Y) voneinander beabstandet sind,
- einen seitlichen flexiblen Vorsprung (205, 305), der von jeder Seitenfläche (204, 304) entlang der Querrichtung (Y-Y) vorsteht.

11. Trägeranordnung (400) für optischen Adapter nach Anspruch 10, wobei:
- die obere Fläche (202) und die untere Fläche (203) des ersten optischen Adapters (200) um eine erste Höhe (H1) beabstandet sind, die gleich oder kleiner als der erste Abstand (D1) ist;
- die seitlichen flexiblen Vorsprünge (305) des zweiten optischen Adapters (300) von der seitlichen Oberfläche (304) in einer zweiten Höhe (H2), gemessen von der unteren Oberfläche (303) entlang der Einführungsrichtung (Z-Z), vorstehen, wobei die zweite Höhe (H2) gleich oder kleiner als der zweite Abstand (D2) ist.

12. Trägeranordnung (400) für optische Adapter nach Anspruch 11, wobei:
- der erste Haltekopf (11) auf die obere Fläche (202) des ersten optischen Adapters (200) wirkt;
- das zweite Halteelement (20) sich verformt und den ersten optischen Adapter (200) elastisch in Richtung des gegenüberliegenden ersten Halteelements (10) drückt, indem es durch den zweiten Haltekopf (21) auf die Seitenfläche (204) des ersten optischen Adapters (200) wirkt.

13. Trägeranordnung (400) für optischen Adapter nach Anspruch 11, wobei:
- der zweite Haltekopf (21) den zweiten optischen Adapter (300) entlang der Einschubrichtung (Z-Z) festhält, indem er auf den seitlichen flexiblen Vorsprung (305) des zweiten optischen Adapters (300) einwirkt.

14. Halteanordnung (400) für optische Adapter nach Anspruch 12, wobei:
- das erste Halteelement (10) eine Aussparung (12) umfasst, die zwischen der Stützbasis (1) und dem ersten Haltekopf (11) ausgebildet ist und in den seitlichen flexiblen Vorsprung (305) des zweiten optischen Adapters (300) eingreift, um den zweiten optischen Adapter (300) entlang einer Längsrichtung (X-X) zu halten, die senkrecht zur Einschubrichtung (Z-Z) und zur Querrichtung (Y-Y) verläuft.

15. Ein optischer Anschlusskasten (500), umfassend:
- eine Basis (501),
- eine Seitenwand (502), die von der Basis (501) vorsteht und einen Innenbereich (503) definiert, wobei die Seitenwand (502) eine oder mehrere Öffnungen (502a, 502b) für den Durchgang von optischen Verbindern aufweist;
- eine einen optischen Adapter tragende Anordnung (400) nach einem der Ansprüche 9 bis 14, wobei die Trägerbasis (1) der einen optischen Adapter tragenden Struktur (100) mit der Basis (501) des optischen Anschlusskastens (500) verbunden oder integriert ist.

## Revendications

1. Structure de support d'adaptateur optique (100) pour adaptateurs optiques (200, 300), comprenant :
- une base de support (1) ;
- une première paire d'éléments de retenue (2a) comprenant un premier élément de retenue (10) et un deuxième élément de retenue (20) opposé, les premier (10) et deuxième éléments de retenue (20) faisant saillie à partir de la base de support (1) le long d'une direction d'insertion (Z-Z) et étant mutuellement espacés le long d'une direction transversale (Y-Y), perpendiculaire à la direction d'insertion (Z-Z), pour recevoir sélectivement un premier adaptateur optique (200) et un deuxième adaptateur optique (300) entre ceux-ci ;
dans laquelle :
- le premier élément de retenue (10) comprend une première tête de retenue (11) configurée pour retenir le premier adaptateur optique (200) le long de la direction d'insertion (Z-Z) et faisant saillie vers le deuxième élément de retenue (20) opposé, la première tête de retenue (11) étant formée à une première distance (D1) de la base de support (1), mesurée le long de la direction d'insertion (Z-Z) ;
- le deuxième élément de retenue (20) est déformable de manière résiliente et comprend une deuxième tête de retenue (21), configurée pour retenir le deuxième adaptateur optique (300) le long de la direction d'insertion (Z-Z) et faisant saillie vers le premier élément de retenue (10) opposé, la deuxième tête de retenue (21) étant formée à une deuxième distance (D2) de la base de support (1), mesurée le long de la direction d'insertion (Z-Z), inférieure à la première distance (D1).

2. Structure de support d'adaptateur optique (100) selon la revendication 1, dans laquelle la première tête de retenue (11) est configurée pour agir sur une surface supérieure du premier adaptateur optique (200).

3. Structure de support d'adaptateur optique (100) selon la revendication 1 ou 2, dans laquelle le deuxième élément de retenue (20) est configuré pour, sélectivement :
- se déformer le long de la direction transversale (Y-Y) et générer une force élastique le long de la direction transversale (Y-Y) pour pousser le premier adaptateur optique (200) contre le premier élément de retenue (10) opposé à travers la deuxième tête de retenue (21), et
- retenir le long de la direction d'insertion (Z-Z) le deuxième adaptateur optique (300) en agissant sur celui-ci à travers la deuxième tête de retenue (21).

4. Structure de support d'adaptateur optique (100) selon une quelconque revendication 1 à 3, dans laquelle le premier élément de retenue (10) comprend un évidement (12), formé entre la base de support (1) et la première tête de retenue (11) et configuré pour venir en prise avec une partie saillante du deuxième adaptateur optique (300), de préférence dans laquelle l'évidement (12) est configuré pour retenir le deuxième adaptateur optique (300) le long d'une direction longitudinale (X-X) perpendiculaire à la direction d'insertion (Z-Z) et à la direction transversale (Y-Y).

5. Structure de support d'adaptateur optique (100) selon une quelconque revendication 1 à 4, comprenant une deuxième paire d'éléments de retenue (2b) espacés de la première paire d'éléments de retenue (2a) le long d'une direction longitudinale (X-X) perpendiculaire à la direction d'insertion (Z-Z) et à la direction transversale (Y-Y), la deuxième paire d'éléments de retenue (2b) comprenant un troisième élément de retenue (30) et un quatrième élément de retenue (40) opposé faisant saillie à partir de la base de support (1) le long de la direction d'insertion (Z-Z), les troisième (30) et quatrième éléments de retenue (40) étant mutuellement espacés le long de la direction transversale (Y-Y) pour recevoir sélectivement les premier (200) et deuxième adaptateurs optiques (300) entre ceux-ci.

6. Structure de support d'adaptateur optique (100) selon la revendication 5, dans laquelle :
- le premier élément de retenue (10) et le troisième élément de retenue (30) sont espacés le long de la direction longitudinale (X-X) pour définir un premier siège (3) entre ceux-ci, qui est configuré pour venir en prise sélectivement avec une partie du premier (200) et du deuxième adaptateur optique (300) ;
- le deuxième élément de retenue (20) et le quatrième élément de retenue (40) sont espacés le long de la direction longitudinale (X-X) pour définir un deuxième siège (4) entre ceux-ci, qui est configuré pour venir en prise avec une partie du premier adaptateur optique (200).

7. Structure de support d'adaptateur optique (100) selon la revendication 6, dans laquelle :
- le premier siège (3) est configuré pour venir en prise avec des parties du premier adaptateur optique (200) et du deuxième adaptateur optique (300) pour retenir le premier adaptateur optique (200) et le deuxième adaptateur optique (300) le long de la direction longitudinale (X-X) ;
- le deuxième siège (4) est configuré pour venir en prise avec des parties du premier adaptateur optique (200) pour retenir le premier adaptateur optique (200) le long de la direction longitudinale (X-X).

8. Structure de support d'adaptateur optique (100) selon une quelconque revendication 5 à 7, dans laquelle au moins l'un du troisième élément de retenue (30) et du quatrième élément de retenue (40) comprend une troisième tête de retenue (31) configurée pour agir sur une surface supérieure du premier adaptateur optique (200) et faisant saillie vers l'élément de retenue (40, 30) opposé respectif de la deuxième paire d'éléments de retenue (2b), la troisième tête de retenue (31) étant formée à une première distance (D1) de la base de support (1), mesurée le long de la direction d'insertion (Z-Z).

9. Ensemble de support d'adaptateur optique (400), comprenant :
- une structure de support d'adaptateur optique (100) selon une quelconque revendication 1 à 8, la structure de support d'adaptateur optique (100) retenant un premier adaptateur optique (200) ou un deuxième adaptateur optique (300),
dans lequel :
- la première tête de retenue (11) retient le long de la direction d'insertion (Z-Z) le premier adaptateur optique (200) en agissant sur le premier adaptateur optique (200), lorsque le premier adaptateur optique (200) est agencé entre le premier élément de retenue (10) et le deuxième élément de retenue (20) ;
- la deuxième tête de retenue (21) retient le long de la direction d'insertion (Z-Z) le deuxième adaptateur optique (300) en agissant sur le deuxième adaptateur optique (300), lorsque le deuxième adaptateur optique (300) est agencé entre le premier élément de retenue (10) et le deuxième élément de retenue (20).

10. Ensemble de support d'adaptateur optique (400) selon la revendication 9, dans lequel le premier adaptateur optique (200) et le deuxième adaptateur optique (300) comprennent :
- un corps (201, 301) ayant une surface inférieure (202, 302) étant face à la base de support (1), une surface supérieure (203, 303) espacée de la surface inférieure (202, 302) le long de la direction d'insertion (Z-Z), et des surfaces latérales (204, 304) mutuellement espacées le long de la direction transversale (Y-Y),
- une saillie souple latérale (205, 305) faisant saillie à partir de chaque surface latérale (204, 304) le long de la direction transversale (Y-Y).

11. Ensemble de support d'adaptateur optique (400) selon la revendication 10, dans lequel :
- la surface supérieure (202) et la surface inférieure (203) du premier adaptateur optique (200) sont espacées pour une première hauteur (H1) inférieure ou égale à la première distance (D1) ;
- les saillies souples latérales (305) du deuxième adaptateur optique (300) font saillie à partir de la surface latérale (304) à une deuxième hauteur (H2), mesurée à partir de la surface inférieure (303) le long de la direction d'insertion (Z-Z), la deuxième hauteur (H2) étant inférieure ou égale à la deuxième distance (D2).

12. Ensemble de support d'adaptateur optique (400) selon la revendication 11, dans lequel :
- la première tête de retenue (11) agit sur la surface supérieure (202) du premier adaptateur optique (200) ;
- le deuxième élément de retenue (20) se déforme et pousse élastiquement le premier adaptateur optique (200) vers le premier élément de retenue (10) opposé en agissant à travers la deuxième tête de retenue (21) sur la surface latérale (204) du premier adaptateur optique (200).

13. Ensemble de support d'adaptateur optique (400) selon la revendication 11, dans lequel :
- la deuxième tête de retenue (21) retient le deuxième adaptateur optique (300) le long de la direction d'insertion (Z-Z) en agissant sur la saillie souple latérale (305) du deuxième adaptateur optique (300).

14. Ensemble de retenue d'adaptateur optique (400) selon la revendication 12, dans lequel :
- le premier élément de retenue (10) comprend un évidement (12), formé entre la base de support (1) et la première tête de retenue (11), et venant en prise avec la saillie souple latérale (305) du deuxième adaptateur optique (300) pour retenir le deuxième adaptateur optique (300) le long d'une direction longitudinale (X-X) perpendiculaire à la direction d'insertion (Z-Z) et à la direction transversale (Y-Y).

15. Boîtier de terminaison optique (500), comprenant :
- une base (501),
- une paroi latérale (502) faisant saillie à partir de la base (501) et définissant une zone interne (503), la paroi latérale (502) ayant une ou plusieurs ouvertures (502a, 502b) pour le passage de connecteurs optiques ;
- un ensemble de support d'adaptateur optique (400) selon une quelconque revendication 9 à 14 ;
dans lequel la base de support (1) de la structure de support d'adaptateur optique (100) est associée ou intégrée à la base (501) du boîtier de terminaison optique (500).
